(19) Europäisches Patentamt
European Patent Office
Office européen des brevets

(11) **EP 1 470 934 B1**

(12) **EUROPEAN PATENT SPECIFICATION**

(45) Date of publication and mention
of the grant of the patent:
**28.11.2007 Bulletin 2007/48**

(51) Int Cl.:
**B44F 9/12** (2006.01)

(21) Application number: **04252357.1**

(22) Date of filing: **22.04.2004**

(54) **Resin-molded product**

Gegossenes Harzprodukt

Produit moulé en résine

(84) Designated Contracting States:
**DE FR GB**

(30) Priority: **23.04.2003 JP 2003117945**

(43) Date of publication of application:
**27.10.2004 Bulletin 2004/44**

(73) Proprietor: **NISSAN MOTOR COMPANY LIMITED**
**Yokohama-shi Kanagawa 221-0023 (JP)**

(72) Inventors:
• **Komatsu, Motoru**
**Kanagawa 228 (JP)**
• **Sugiyama, Hisashi**
**Yokohama-shi**
**Kanagawa-ken (JP)**

• **Maruse, Yuuko**
**Kanagawa-ken (JP)**
• **Takeuchi, Takashi**
**Kanagawa-ken (JP)**

(74) Representative: **Godwin, Edgar James**
**Marks & Clerk**
**90 Long Acre**
**London WC2E 9RA (GB)**

(56) References cited:
**FR-A- 1 241 607        FR-A- 1 281 464**
**FR-A- 2 575 698        JP-A- 10 025 668**
**US-A- 6 103 342**

**Description**

The present invention relates to a resin-molded product and, more particularly, to a resin-molded product having a surface shape preferably for use in interior material of a vehicle such as an automobile.

Attempt has been made to provide interior material, for a vehicle, with a surface which is applied with a synthetic leather or a PVC sheet, resulting from reversal pattern of natural leather, to achieve improvement over a texture of interior material (with reference to Japanese Patent Application Laid-Open Publication No. 10-25668).

Further, in order to achieve reduction in costs, an approach has been undertaken to apply a convexo-concave shape, such as a patterned shape resulting from reversal pattern of natural leather, onto a surface of interior material made of an injection molded product formed of thermoplastic resin for thereby achieving improvement over a texture of resulting interior material.

However, upon studies conducted by the present inventors, due to an approach made in the past to form a convexo-concave shape such that interior material is formed upon transfer of merely a pattern of natural leather without investigating what kind of factors in shape results in improvement over the texture, interior material is suffered from a so-called increased plastic feeling and it is not necessary the case that it is possible to obtain a resin-molded product favorable in the texture.

The present invention has been completed upon investigation of such studies conducted by the present inventors and has an object to provide a resin-molded product that is able to realize a convexo-concave patterned shape, which has less plastic feeling, in a high texture.

After dedicated studies conducted for the purpose of achieving the above object, the present inventors have investigated and analyzed on what kind of influence is given to the texture of the convexo-concave patterned shape with the factors in shape and have reached an acknowledgment that it is possible to obtain a resin-molded product that is able to realize a convexo-concave patterned shape in a high texture by controlling such factors in shape, thereby completing the present invention.

To achieve the above object, in one aspect of the present invention, a resin-molded product that has a surface formed with a patterned shape imitative of natural leather, comprises: a surface shape that is formed so as to satisfy glossiness Gs (60°), which is defined by JIS Z8741, in a value greater than 0% and equal to or less than 2.7% and to have a microscopic convexoconcave texture with an absolute value equal to or greater than 1.2 and equal to or less than 3.0 on a gradient SC of a straight line intersecting two points at 100% and 50% in a cutting level of a bearing curve corresponding to a roughness curve, which is defined by JIS B0601.

Preferably, the resin-molded product that has a surface formed with a patterned shape imitative of natural leather, comprises: a surface shape that is formed such that arithmetic mean roughness Ra ($\mu$m) on a roughness curve, which is defined by JIS B0601, and brightness L*, which is measured by JIS Z8722 and defined by JIS Z8729, satisfy the relationship expressed by a formula expressed below, and the brightness L* falls in a range equal to or greater than 25 and equal to or less than 56.8.

$$0.14 \times L^* + 9.2 < Ra < 0.20 \times L^* + 15$$

Preferably, the resin-molded product has a surface formed with a patterned shape imitative of natural leather, comprises: a surface shape that is formed such that brightness L*, which is measured by JIS 8722 and defined by JIS8729, a gradient SC of a straight line intersecting two points at 100% and 50% in a cutting level of a bearing curve arithmetic mean roughness Ra ($\mu$m) on the roughness curve, which is defined by JISB0601 and the glossiness Gs (60°) (%) satisfy a formula expressed below.

$$9 \geqq L^* \times L^* \times (0.0014 \times Gs\ (60°) + 0.0002 \times Ra) - L^* \times (0.15 \times Gs\ (60°) + 0.033 \times Ra +$$
$$0.0125 \times SC - 0.29) + 4.25 \times Gs\ (60°) + 0.85 \times Ra - 1.69 \times SC$$

Other and further features, advantages, and benefits of the present invention will become more apparent from the following description taken in conjunction with the following drawings.

**BRIEF DESCRIPTION OF THE DRAWINGS**

FIG 1A is a schematic perspective view of a resin-molded product with a patterned shape of an embodiment according to the present invention;

FIG. 1B is a partial schematic cross sectional representation of the resin-molded product of the presently filed embodiment;

FIG 2A is a view illustrating a roughness curve f of the resin-molded product of the presently filed embodiment;

FIG. 2B is a view illustrating a bearing curve BC, corresponding to the roughness curve shown in FIG. 2A, in the resin-molded product of the presently filed embodiment;

FIG. 3 is a view illustrating the relationship between glossiness Gs (Gs (60˚)) (%) and a gradient SC of the bearing curve of the resin-molded product of the presently filed embodiment;

FIG. 4 is a view illustrating the relationship between arithmetic mean roughness Ra ($\mu$m) and brightness L* of the resin-molded product of the presently filed embodiment;

FIG. 5 is a view illustrating the relationship between the brightness L*, the gradient SC of the bearing curve, the arithmetic mean roughness Ra ($\mu$m) and the glossiness Gs (Gs (60˚)) (%) and sensory estimation of the resin-molded product of the presently filed embodiment;

FIG. 6 is a Table 1 representing measured results and estimation results on Examples 1 to 14 of the presently filed embodiment;

FIG. 7 is a Table 2 representing measured results and estimation results on Comparative Examples 1 to 31 of the presently filed embodiment;

FIG. 8 is a Table 3 representing measured results and estimation results on Comparative Examples 32 to 77 of the presently filed embodiment;

FIG 9 is a Table 4 representing measured results and estimation results on Examples 15 to 28 of the presently filed embodiment;

FIG. 10 is a Table 5 representing measured results and estimation results on Comparative Examples 78 to 108 of the presently filed embodiment;

FIG. 11 is a Table 6 representing measured results and estimation results on Comparative Examples 109 to 154 of the presently filed embodiment;

FIG. 12 is a Table 7 representing measured results and estimation results on Examples 29 to 42 of the presently filed embodiment;

FIG. 13 is a Table 8 representing measured results and estimation results on Comparative Examples 155 to 185 of the presently filed embodiment; and

FIG. 14 is a Table 9 representing measured results and estimation results on Comparative Examples 186 to 231 of the presently filed embodiment.

**DETAILED DESCRIPTION OF THE PREFERRED EMBODIMENTS**

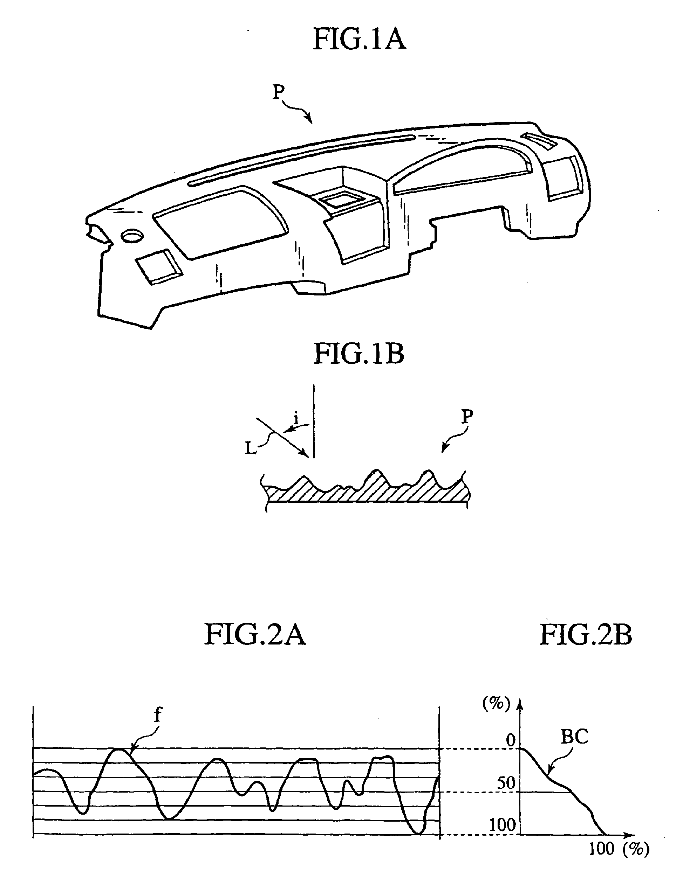

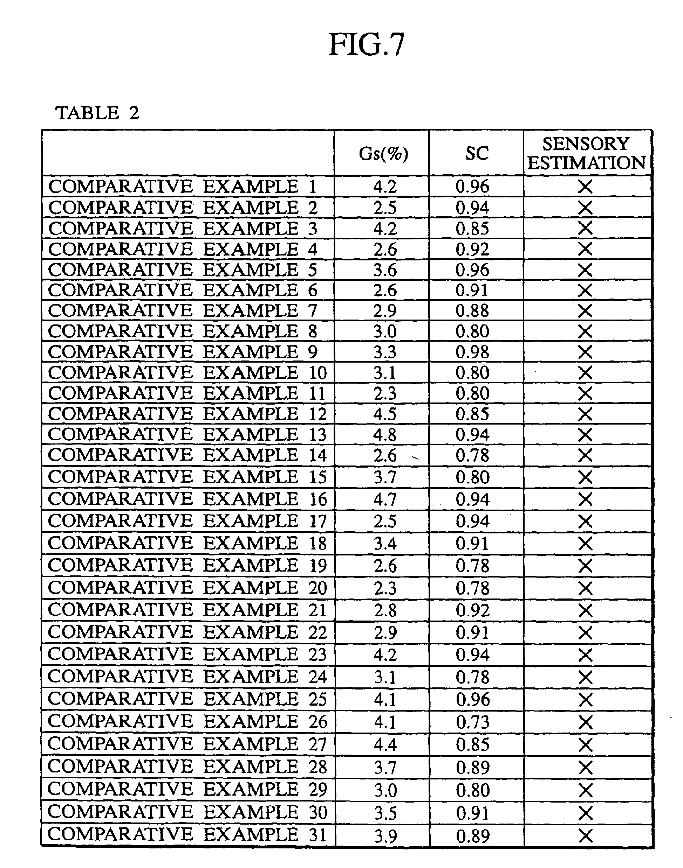

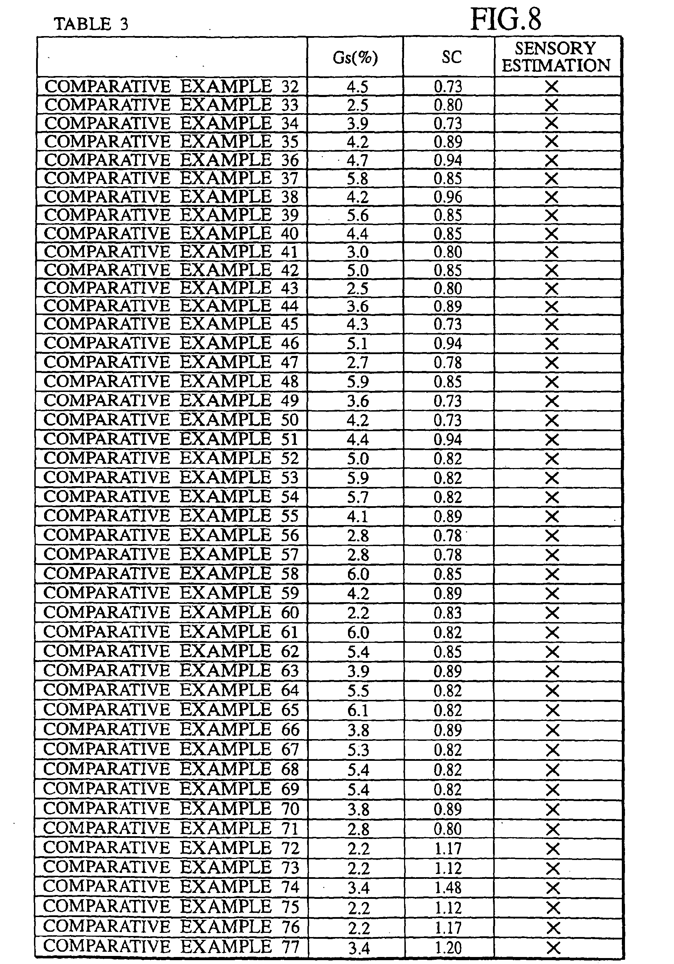

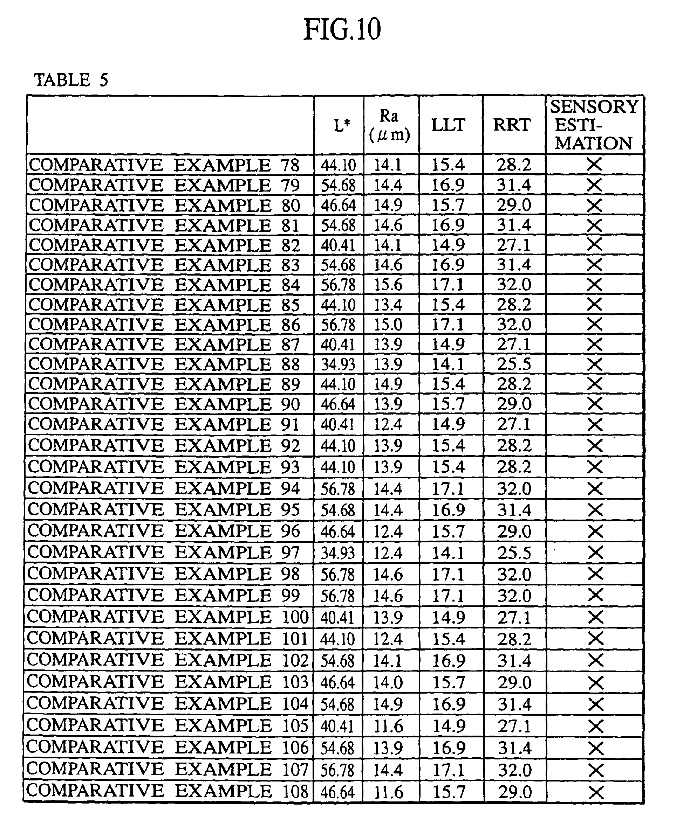

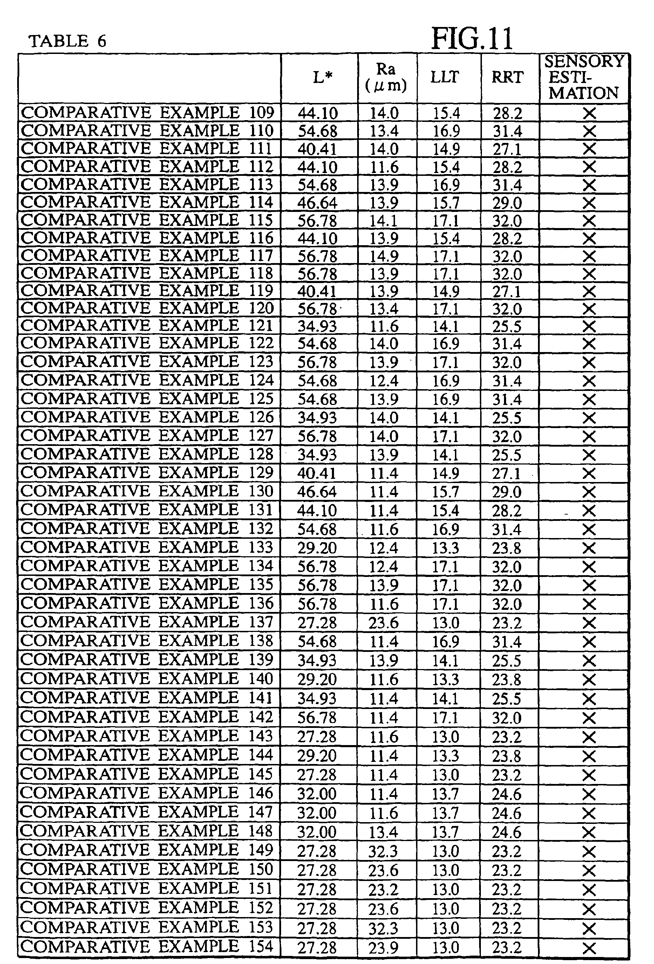

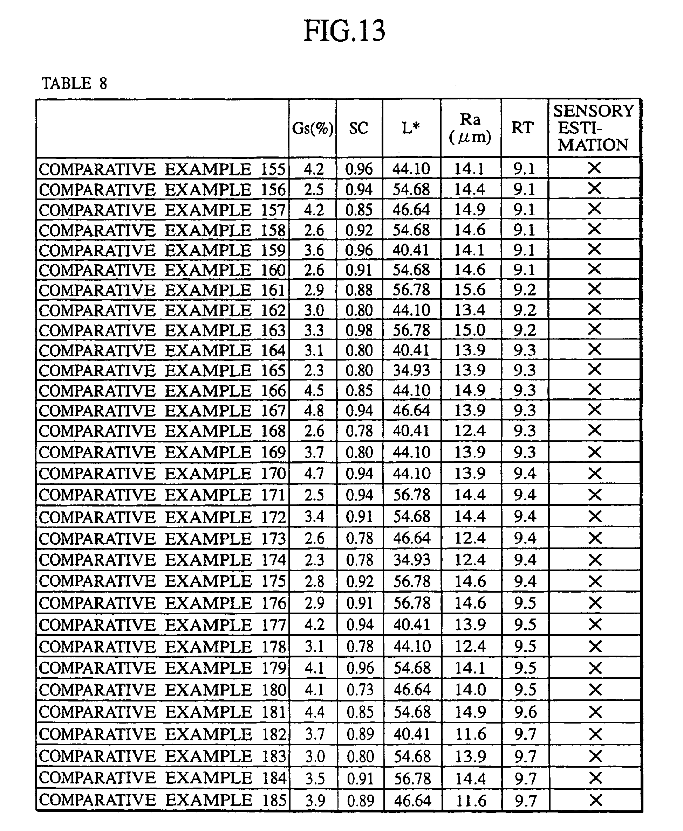

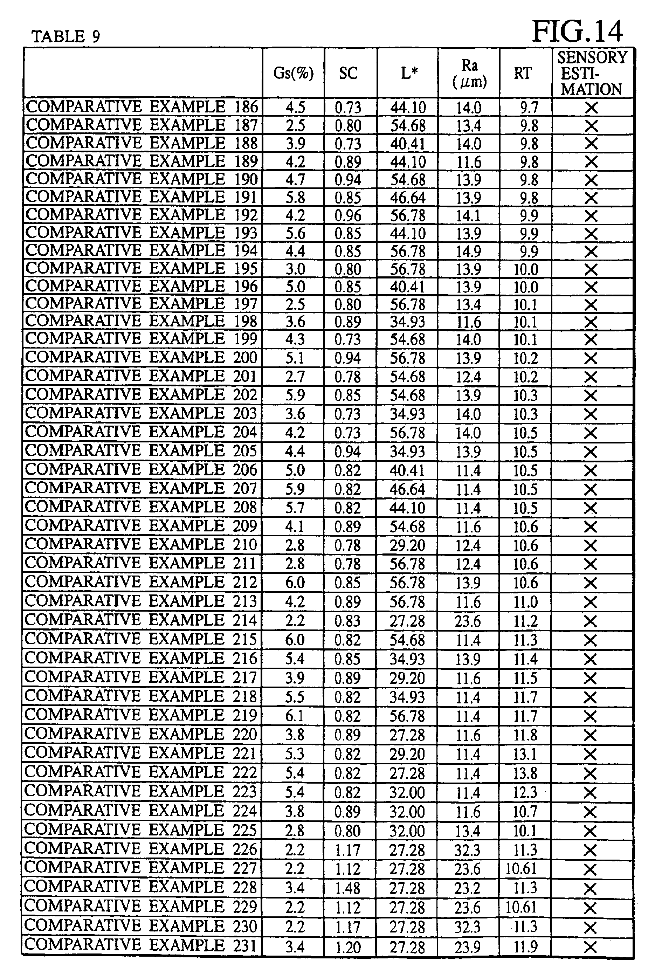

Hereinafter, a resin-molded product of an embodiment according to the present invention is described in detail with reference to FIGS. 1 to 14 of the accompanying drawings.

As shown in FIG. 1A, a resin-molded product P of the presently filed embodiment can be applied to an instrument panel of an automobile and, as shown in FIG. 1B in schematic cross section, has a surface formed with a microscopic convexo-concave shape provided with a patterned shape imitative of typically a natural leather.

Here, the resin-molded product of the presently filed embodiment is realized in first to three resin-molded products.

The first resin-molded product of the presently filed embodiment is a resin-molded product, with a surface having such a patterned shape, which has glossiness Gs (Gs (60˚)) in a range above 0% and equal to or less than 2.7%, wherein a microscopic convexoconcave on the surface has a surface shape that satisfies an absolute value equal to or more than 1.2 to equal to or less than 3.0 on a gradient SC of a straight line intersecting two points at 100 % and 50 % in cutting level of a bearing curve corresponding to a roughness curve.

In this place, glossiness Gs (Gs (60˚)) is provided in accordance with JIS Z8741 and, as shown in FIG 1B, "60˚" represents that an incident angle i of irradiation light L is 60˚. Also, the bearing curve corresponding to the roughness curve is provided in accordance with JIS B0601, and a roughness curve f is shown in FIG 2A while a bearing curve BC is shown in FIG 2B. In FIG 2B the ordinates axis designates a cutting level, and the abscissa axis designates a bearing length ratio (bearing ratio).

Thus, the first resin-molded product is applied with the surface shape formed such that glossiness Gs (Gs (60˚)) lies in a range above 0% and equal to or less than 2.7% and the microscopic convexoconcave on the surface has the absolute value equal to or greater than 1.2 and equal to or less than 3.0 on the gradient SC of the straight line intersecting the two points at 100 % and 50 % in cutting level of the bearing curve corresponding to the roughness curve.

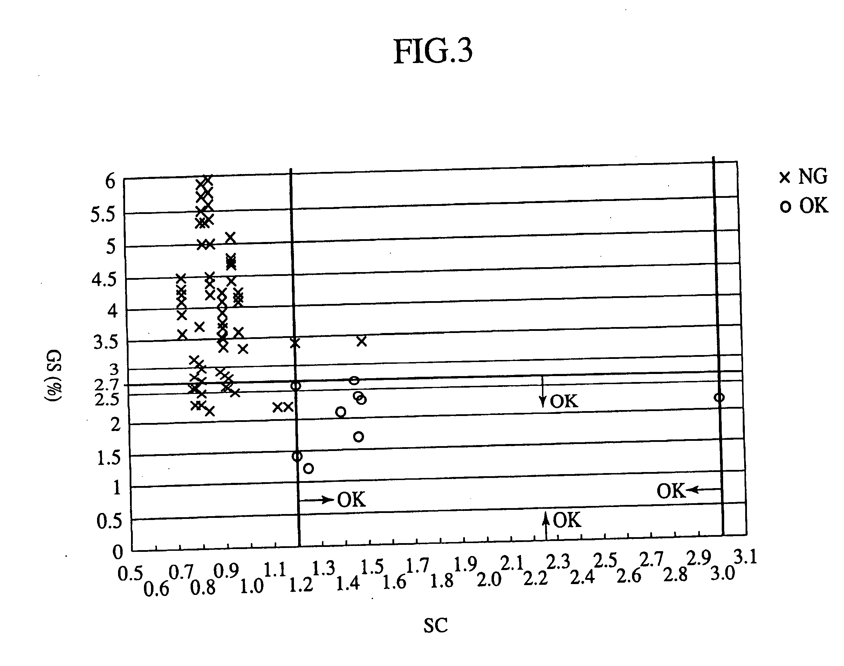

Such a relationship has been discovered, as shown in FIG. 3, from results of samples whose glossiness Gs (Gs (60˚)) and the bearing curve were varied whereupon panelists carried out sensory estimation on the samples under a light source with natural light to estimate the presence of or the absence of textures on respective samples. Incidentally, the abscissa SC in FIG 3 represents an absolute value of the gradient of the straight line intersecting the two points at 100 % and 50 % in cutting level of the bearing curve, and the ordinate Gs represents glossiness Gs (Gs (60˚)) when the incident angle of irradiation light is 60˚. Also, In FIG. 3, those of the samples, which were found to be favorable in sensory estimation, are designated with a sign ○ (OK), and those of the samples which are unfavorable, are designated with a sign × (NG).

In FIG. 3, first, as glossiness Gs (Gs (60˚)) exceeds 2.7 %, all the samples are deteriorated in texture.

In the meanwhile, if the gradient of the bearing curve lies at a value less than 1.2, all the samples are deteriorated in texture. Also, those of the samples, in which the gradient of the bearing curve exceeds 3.0, result in less possibility of manufacturing the product because an injection molded product of the present status, i.e., an injection molded product particularly intended for automobile interior material tends to have a pattern with an excessively narrowed distance between adjacent patterned valleys, and a molding die becomes hard to have a proper strength on concave ridges that form a valley.

Next, a second resin-molded product of the presently filed embodiment is a resin-molded product, which has a surface formed with a patterned shape in a manner similar to that of the first product described above, and has, in addition to the factors mentioned above or as an independent factor, arithmetic mean roughness Ra ($\mu$m) on the roughness curve and brightness L* that satisfy the relationship expressed by a formula (1) expressed below while having the brightness L* that lies in a range equal to or greater than 25 and equal to or less than 56.8.

$$0.14 \times L^* + 9.2 < Ra < 0.30 \times L^* + 15 \qquad \cdots \quad (1)$$

Here, arithmetic mean roughness Ra on the roughness curve was provided in accordance with JIS B0601, and brightness L* was measured in conformity with JIS Z8722 and was defined in accordance with JIS Z8729.

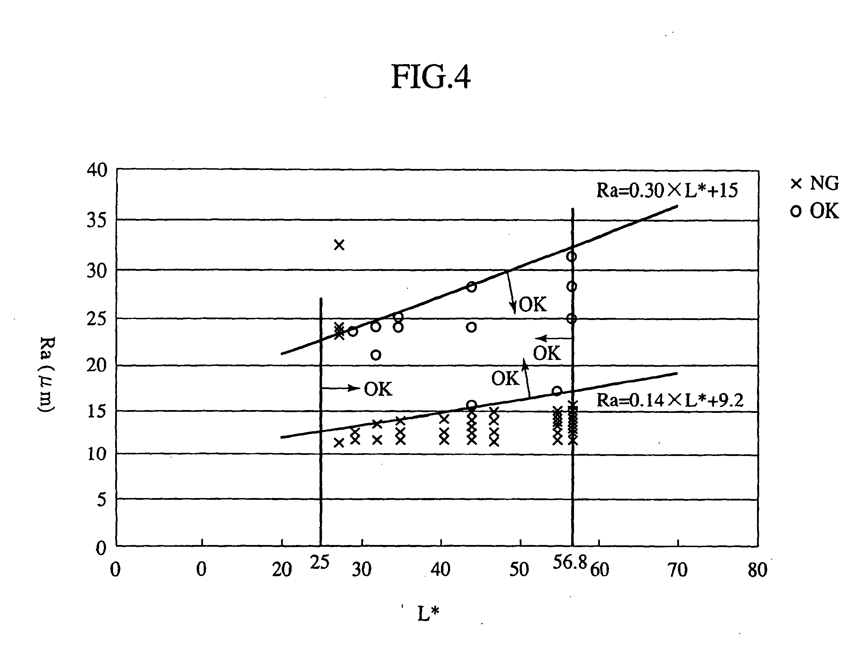

Thus, the second resin-molded product satisfies the relationship expressed by the formula (1) and this results from the fact that, in the relationship between arithmetic mean roughness Ra ($\mu$ m) and brightness L* as shown in FIG 4 wherein the abscissa represents brightness L* and the ordinate represents arithmetic mean roughness Ra ($\mu$m), worse results were found in texture valuation on sensory estimation in an area above a line expressed by Ra = 0.30 × L*+15 and, also in an area below a line expressed by Ra = 0.30 × L*+9.2, worse results were found in texture evaluation. Incidentally, in FIG. 4, those of the samples, which were found to be favorable in sensory estimation, are designated with a sign ○ (OK), and those of the samples, which are unfavorable, are designated with a sign × (NG).

Further, those of the samples which have brightness L* falling in a value less than 25 can not be realized with brightness given by coloring through the use of resin material that is currently available. On the contrary, those of the samples which have brightness L* falling in a value exceeding 56.8 becomes too bright to be closer to white and a difficulty is encountered in discriminating the patterned shape, resulting in an inability of estimating a pattern texture of the product. Thus, it can be understood that a product can be provided with a high texture in an area surrounded with the two lines, as set forth above, in brightness in a range equal to or greater than 25 and equal to or less than 56.8.

Furthermore, a third resin-molded product of the presently filed embodiment is a resin-molded product, which has a surface formed with a patterned shape in a manner similar to those described above, and has, in addition to the factors mentioned above or as an independent factor, the brightness L*, the gradient SC of the straight line intersecting the two points 100% and 50% in cutting level of the bearing curve corresponding to the roughness curve, the arithmetic mean roughness Ra ($\mu$m) on the roughness curve and the glossiness Gs (Gs (60˚)) satisfy the relationship expressed by a formula (2) expressed below.

$$9 \geqq L^* \times L^* \times (0.0014 \times Gs + 0.0002 \times Ra) - L^* \times (0.15 \times Gs + 0.033 \times Ra + 0.0125 \times SC$$
$$- 0.29) + 4.25 \times Gs + 0.85 \times Ra - 1.69 \times SC \quad \cdots \quad (2)$$

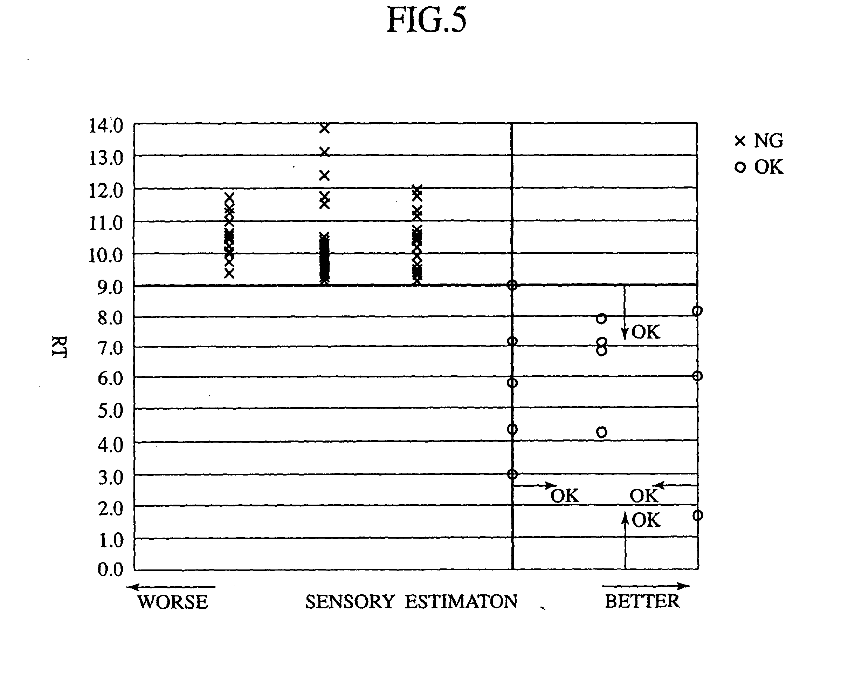

The above relationship results from FIG 5 showing a graph wherein the abscissa represents a degree of sensory estimation and the ordinate represents a value of RT of the right side of the above formula (2) and wherein values, derived from the above formula (2), and degrees of texture evaluation resulting from sensory estimation are plotted for comparison. That is, in FIG 5, it can be understood that those of the samples in which RT exceeds 9 is low in texture and those of the samples in which RT is less than 9 is high in texture. Incidentally, in FIG 5, those of the samples, which were found to be favorable in sensory estimation, are designated with a sign ○ (OK), and those of the samples, which are found to be unfavorable, are designated with a sign × (NG).

As set forth above, although it is suffice for the first to third resin-molded products of the presently filed embodiment to satisfy the given relationships expressed by the formulae (1) and (2), no limitation is intended for the other particulars and a suitable forming method, source resin material, colorant and other additives may be employed.

Source resin material may preferably include thermoplastic resin, which makes it possible to employ an injection molding method, and may preferably include PP (polypropylene) family, ABS (acrylonitrile -butadiene - styrene) resin family, AES (acrylonitrile - ethylene-propylene rubber-styrene) resin family, ASA (acrylic styrene-acrylate) resin family, POM (polyacetal) family, PA (polyamide) family, PC (poly carbonate) family, PVC (polyvinyl chloride) family and resin of TPE (thermoplastic elastomer) family, with these materials being able to be used in an independent form or in combination of multiple kinds.

Further, PP family may preferably include block copolymer composed of polypropylene in part and ethylene - propylene random copolymer in part or resin of PP family in which talk is added to this block copolymer.

Furthermore, such resin-molded product may be employed as a variety of resin products, such as a resin sheet, a resin board and a book cover, and may also preferably have another application to interior material of an automobile.

Moreover, except to satisfy the given relationships set forth above, because a vehicle compartment inside the automobile is exposed to a high temperature condition in midsummer, the resin product to be used needs not to be deformed even at a temperature above 70˚C and to have light resistance such that even under outdoor exposure (an under glass type) of the product, no remarkable tamished brown should occur for at least two years. Consequently, it is said that with the presence of such characteristics in combination for use, the resin-molded product can be more preferable as interior material of the automobile.

(Example)

Hereinafter, the presently filed embodiment is described more in detail with various Examples and Comparative Examples. Of course, the presently filed embodiment is not limited to these applications.

First, description is made of methods of manufacturing resin-molded products in various Examples and various Comparative Examples and procedures for evaluating a variety of characteristics of the products.

Manufacturing of Molded Product Having Surface With Patterned Shape

First, a surface of a molding die was finished in a flat form by carrying out etching operations several times using a masking film to apply a patterned shape, imitative of typically natural leather, onto the surface in granular asperities. During such operations, methods of performing etching operations were carried out in various modified forms, preparing molding dies including those of which surfaces had patterned shapes, formed in different patterns, to allow the surfaces of the molding dies to have variations in a gradient of the bearing curve and the other of which arithmetic mean roughness was varied.

Subsequently, sand blasting was carried out on the molding dies by changing counts of and mixture ratio of glasses and sands, changing glossiness Gs (Gs (60˚)) on the surfaces of the molding dies.

In a manner set forth above, the molding dies were prepared changing the bearing curves, arithmetic mean roughness and glossiness Gs (Gs (60˚)), respectively.

Through the use of such a variety of molding dies, a series of injection moldings were carried out with PP resin upon using pigments coped with a variety of colors to provide a change in brightness, thereby manufacturing respective molded products.

Measurement on Glossiness Gs(Gs (60˚))

Glossiness Gs (Gs (60˚)) of resulting molded products were measured using a gloss meter (Trade name: GM-60) made by Minolta Corp., with a mean value at five measured points being adopted as a measured value.

Measurement on Arithmetic Mean Roughness and Bearing Curve

Three dimensional measurements were carried out on the resulting molded products within a range of 30 × 30 mm using a roughness measuring device (Trade mark: SK-30K) made by Kosaka Seisakusho, obtaining arithmetic mean roughness and bearing curves.

Measurement on Brightness

The resulting respective molded products were measured using a colorimeter (Trade mark: CR-300) manufactured by Minolta Corp., obtaining brightness L*.

Sensory Estimation on Patterned Shape

Visual observations were carried out on the resulting molded products under a standard light source, carrying out sensory estimation on the presence of or the absence of the texture.

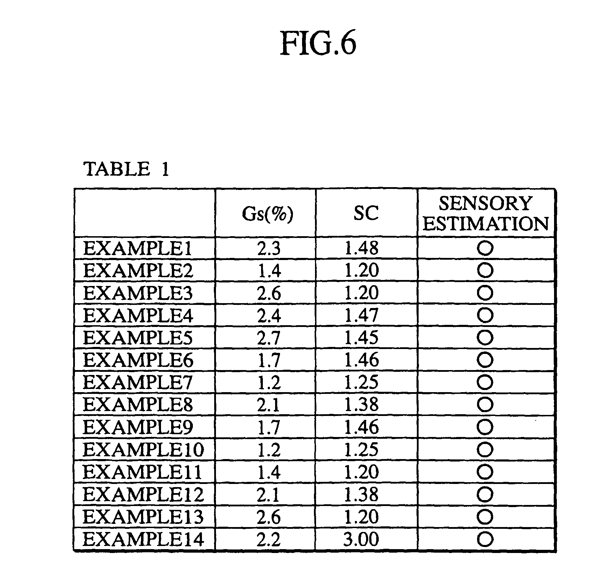

Also, in Tables 1 to 9 shown in FIGS. 6 to 14, respectively, those of the products, which were favorable in texture, are designated with a sign ○ (OK), and those of the products, which were unfavorable in texture, are designated with a sign × (NG).

(Examples 1 to 14 and Comparative Examples 1 to 77)

When performing injection molding of PP resin, glossiness Gs (Gs (60˚)) and the bearing curves were varied by changing time for which the molding dies were etched and by changing conditions under which sand blasting was carried out, thereby obtaining molded products in Examples 1 to 14 and Comparative Examples 1 to 77 which were varied in glossiness Gs (Gs (60˚)) and the bearing curves.

Measured results and estimation results of the molded products, obtained in a manner set forth above, are indicated on Tables 1 to 3 shown in FIGS. 6 to 8, respectively, and results of sensory estimation on texture of the products in terms of parameters including glossiness Gs (Gs (60˚)) (%) and the gradient SC in the bearing curve are indicated in FIG 3.

Incidentally, those of the products, particularly for injection molded products for automobile interior material of the present status, in which the gradient SC of the bearing curve exceeds 3.0 result in the formation of patterned shapes with an excessively narrowed distance between adjacent patterned valleys, that is, convex ridges forming valleys on the molding die have no proper strength, and it can not be said that such approach is practical.

(Examples 15 to 28 and Comparative Examples 78 to 154)

When performing injection molding of PP resin, the brightness was varied by changing pigments coped with a variety of colors to be used and arithmetic mean roughness was varied by changing time for which the molding dies were etched, thereby obtaining molded products in Examples 15 to 28 and Comparative Examples 78 to 154.

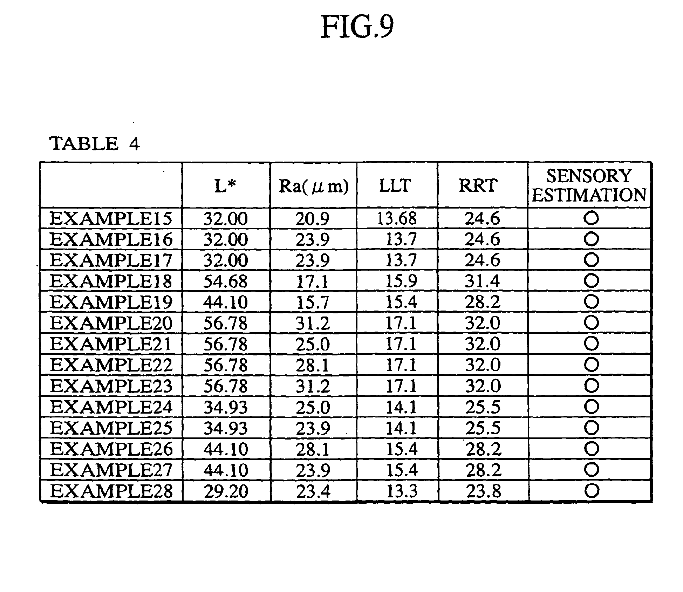

Measured results and estimation results of the molded products, obtained in a manner set forth above, are indicated on Tables 4 to 6 shown in FIGS. 9 to 11, respectively, and results of sensory estimation on texture in terms of parameters including arithmetic mean roughness Ra ($\mu$m) and brightness L* are shown in FIG 4. Incidentally, in FIGS. 9 to 11, each value of the left side of the formula (2) is indicated with LLT and each value of the right side thereof is indicated with RRT.

Incidentally, injection molded products whose brightness L* is less than 25 were impossible to be realized through coloring with resin material of the present status and were not practical. Also, those of the products in which brightness L* exceeded 56.8 were too bright, to be so closer to a white color that no discrimination could be made for the patterned shape and no estimation on texture could be performed.

(Examples 29 to 42 and Comparative Examples 155 to 231)

When performing injection molding of PP resin, the brightness was varied by changing pigments coped with a variety of colors to be used and glossiness Gs (Gs (60˚)), the bearing curves and arithmetic mean roughness were varied by changing time for which the molding dies were etched and conditions of sand blasting, thereby obtaining molded products in Examples 29 to 42 and Comparative Examples 155 to 231.

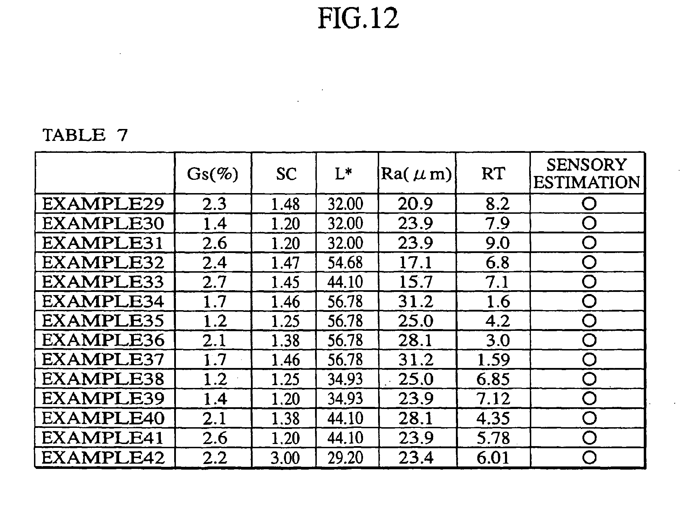

Measured results and estimation results of the molded products, obtained in a manner set forth above, are indicated on Tables 7 to 9 shown in FIGS. 12 to 14, respectively, and results that form a basis on which the formula (2) of the relationship among brightness L*, the gradient SC in the bearing curve, arithmetic mean roughness Ra ($\mu$m) and glossiness Gs (Gs (60˚)) (%) is derived are indicated in FIG. 5.

Incidentally, those of the products, particularly for injection molded products for automobile interior material of the present status, in which the gradient SC of the bearing curve that is varied exceeds 3.0 result in the formation of patterned shapes with an excessively narrowed distance being formed between adjacent patterned valleys whereby convex ridges forming valleys on the molding die can not have proper strength, and it is not practical. Moreover, those of the products whose brightness L* was less than 25 were impossible to be realized through coloring with resin material of the present status. On the contrary, those of the products whose brightness L* exceeded 56.8 were too bright and closer to a white color so that no discrimination could be made for the patterned shape and no estimation on texture could be performed.

Various Examples described above satisfy the relevant conditions of the presently filed embodiment. For example, the molded product made of PP resin in Example 42 has a surface including a microscopic convexo-concave shape with a patterned shape that is imitative of typically natural leather and has glossiness Gs (Gs (60˚)) of 2.2 % and the gradient SC of 3. 00 on the bearing curve and also brightness L* of 29.20 and arithmetic mean roughness Ra of 23.4 both of which satisfy the formula (1). At the same time, a value resulting from calculation on the formula (2) revealed 6.01 that were less than 9.

As set forth above, according to the structure of the presently filed embodiment, due to the presence of acknowledgment of what kind of influence is given to the texture depending on the factors in shape of the patterned shape, such factors in shape are appropriately controlled and, thus, it becomes possible to provide a resin-molded product with a patterned shape in a high texture and in less plastics feeling.

## Claims

1. A resin-molded product (P) that has a surface formed with a patterned shape imitative of natural leather, comprising:

    a surface shape that is formed so as to satisfy glossiness Gs (60˚), which is defined by JIS Z8741, in a value greater than 0% and equal to or less than 2.7% and to have a microscopic convexoconcave texture with an absolute value equal to or greater than 1.2 and equal to or less than 3.0 on a gradient SC of a straight line intersecting two points at 100% and 50% in a cutting level of a bearing curve corresponding to a roughness curve, which is defined by JIS B0601.

2. The resin-molded product (P) according to claim 1, wherein in the surface shape, arithmetic mean roughness Ra ($\mu$ m) on the roughness curve, which is defined by JIS B0601, and brightness L* which is measured by JIS Z8722 and defined by JIS Z8729, satisfy the relationship expressed by a formula expressed below, and the brightness L* falls in a range equal to or greater than 25 and equal to or less than 56.8:

$$0.14 \times L^* + 9.2 < Ra < 0.20 \times L^* + 15$$

3. The resin-molded product (P) according to claim 1, wherein in the surface shape, brightness L*, which is measured by JIS Z8722 and defind by JIS Z8729, the gradient SC of the straight line intersecting the two points at 100 % and 50 % in the cutting level of the bearing curve, arithmetic mean roughness Ra ($\mu$ m) on the roughness curve, which is defined by JIS B0601, and the glossiness Gs (60˚) (%) satisfy a formula expressed below:

$$9 \geq L^* \times L^* \times (0.0014 \times Gs\ (60˚) + 0.0002 \times Ra) - L^* \times (0.15 \times Gs\ (60˚) + 0.033 \times Ra +$$
$$0.0125 \times SC - 0.29) + 4.25 \times Gs (60˚) + 0.85 \times Ra - 1.69 \times SC$$

4. The resin-molded product (P) according to any of claims 1 to 3, wherein molding material of the resin-molded product is thermoplastic resin available to be applied to injection molding.

5. The resin-molded product (P) according to claim 4, wherein the thermoplastic resin is at least one element selected from a group including PP, ABS resin, AES resin, ASA resin, POM, PA, PC, PVC and PTE.

6. The resin-molded product (P) according to any of claims 1 to 5, wherein the resin-molded product is used for interior material of an automobile.

**Patentansprüche**

1. Gegossenes Harzprodukt (P) mit einer Oberfläche, die mit einer gemusterten, natürliches Leder imitierenden Form ausgebildet ist, aufweisend:

   eine Oberflächenform, die so ausgebildet ist, dass sie einem Glanz Gs (60˚) genügt, der definiert ist durch den Standard JIS Z8741, in einem Wert größer als Null Prozent und gleich oder kleiner als 2,7%, und die so ausgebildet ist, dass sie über eine mikroskopische, konvex-konkave Textur verfügt mit einem absoluten Wert gleich oder größer als 1,2 und gleich oder kleiner als 3,0 auf einem Gradienten SC einer geraden Linie, die zwei Punkte bei 100% und 50% in einer Schnitthöhe einer Führungskurve schneidet, die einer Rauhigkeitskurve entspricht, wie sie im Standard JIS B0601 definiert ist.

2. Gegossenes Harzprodukt (P) nach Anspruch 1, wobei in der Oberflächenform der arithmetische Mittelwert der Rauhigkeit Ra ($\mu$m) auf der Rauhigkeitskurve, die nach dem Standard JIS B0601 definiert ist, und die Helligkeit L*, die nach dem Standard JIS Z8722 gemessen wird und definiert ist im Standard JIS Z8729, der in der nachfolgend dargestellten Formel ausgedrückten Beziehung genügen und wobei die Helligkeit L* in einen Bereich gleich oder größer als 25 und gleich oder kleiner als 56,8 fällt:

$$0{,}14 \times L^* + 9{,}2 < Ra < 0{,}20 \times L^* + 15$$

3. Gegossenes Harzprodukt (P) nach Anspruch 1, wobei in der Oberflächenform, die Helligkeit L*, die nach dem Standard JIS Z8722 gemessen wird und definiert ist im Standard JIS Z8729, der Gradient SC der geraden Linie, die die zwei Punkte bei 100% und 50% in der Schnitthöhe der führungskurve schneidet, der arithmetische Mittelwert der Rauhigkeit Ra ($\mu$m) auf der Rauhigkeitskurve, die definiert ist durch den Standard JIS B0601, und der Glanz Gs (60˚) (%) der nachfolgend dargestellten Formel genügen:

$$9 \geqq L^* \times L^* \times (0{,}0014 \times Gs\ (60°) + 0{,}0002 \times Ra) - L^* \times (0{,}15 \times Gs\ (60°) + 0{,}033 \times Ra + 0{,}0125 \times SC -$$
$$0{,}29) + 4{,}25 \times Gs\ (60°) + 0{,}85 \times Ra - 1{,}69 \times SC$$

4. Gegossenes Harzprodukt (P) nach einem der Ansprüche 1 bis 3, wobei die Spritzgussmasse des gegossenen Harzproduktes thermoplastisches Harz ist, das zur Anwendung beim Spritzgießen verfügbar ist.

5. Gegossenes Harzprodukt (P) nach Anspruch 4, wobei das thermoplastische Harz mindestens ein wesentlicher Bestandteil ist, der ausgewählt ist aus der Gruppe, einschließend PP, ABS-Harz, AES-Harz, ASA-Harz, POM, PA, PC, PVC und PTE.

6. Gegossenes Harzprodukt (P) nach einem der Ansprüche 1 bis 5, wobei das gegossene Harzprodukt als Material für den Fahrzeuginnenraum eines Automobils verwendet wird.

**Revendications**

1. Produit moulé en résine (P) qui a une surface formée d'une forme à motif imitant le cuir naturel, comprenant:

   une forme de surface qui est formée afin de satisfaire le brillant Gs (60˚), qui est définie par la norme JIS Z8741, en une valeur supérieure à 0 % et égale ou inférieure à 2,7 % et pour avoir une texture microscopique convexoconcave avec une valeur absolue égale ou supérieure à 1,2 et égale ou inférieure à 3,0 sur un gradient SC d'une ligne droite croisant deux points à 100 % et 50 % à un niveau de coupe d'une courbe portante correspondant à une courbe de rugosité, qui est définie par la norme JIS B0601.

2. Produit moulé en résine (P) selon la revendication 1, dans lequel dans la forme de surface, la moyenne arithmétique de la rugosité Ra ($\mu$m) sur la courbe de rugosité, qui est définie par la norme JIS B0601, et la luminosité L* qui est mesurée par la norme JIS Z8722 et définie par la norme JIS Z8729, satisfont la relation exprimée par une formule exprimée ci-dessous, et la luminosité L* tombe dans une plage égale ou supérieure à 25 et égale ou inférieure à 56,8:

$$0,14 \text{ x } L^* + 9,2 < Ra < 0,20 \text{ x } L^* + 15$$

3. Produit moulé en résine (P) selon la revendication 1, dans lequel dans la forme de surface, la luminosité L*, qui est mesurée par la norme JIS Z8722 et définie par la norme JIS Z8729, le gradient SC de la ligne droite croisant les deux points à 100 % et 50 % du niveau de coupe de la courbe portante, la moyenne arithmétique de rugosité Ra ($\mu$m) sur la courbe de rugosité, qui est définie par la norme JIS B0601, et le brillant Gs (60˚) (%) satisfont une formule exprimée ci-dessous:

$$9 \geq L^* \text{ x } L^* \text{ x } (0,0014 \text{ x } Gs\ (60°) + 0,0002 \text{ x } Ra) - L^* \text{ x } (0,15 \text{ x } Gs\ (60°) + 0,033 \text{ x } Ra + 0,0125 \text{ x } SC -$$
$$0,29) + 4,25 \text{ x } Gs\ (60°) + 0,85 \text{ x } Ra - 1,69 \text{ x } SC$$

4. Produit moulé en résine (P) selon l'une quelconque des revendications 1 à 3, dans lequel le matériau de moulage du produit moulé en résine est une résine thermoplastique disponible pour être appliquée au moulage par injection.

5. Produit moulé en résine (P) selon la revendication 4, dans lequel la résine thermoplastique est au moins un élément choisi parmi le groupe incluant le PP, la résine ABS, la résine AES, la résine ASA, POM, PA, PC, PVC et PTE.

6. Produit moulé en résine (P) selon l'une quelconque des revendications 1 à 5, dans lequel le produit moulé en résine est utilisé comme matériau d'intérieur d'une automobile.

# FIG.1A

P

# FIG.1B

i

L

P

# FIG.2A

f

# FIG.2B

(%)

0

BC

50

100

100 (%)

# FIG.3

EP 1 470 934 B1

FIG.4

FIG.5

# FIG.6

TABLE 1

|  | Gs(%) | SC | SENSORY ESTIMATION |
|---|---|---|---|
| EXAMPLE1 | 2.3 | 1.48 | O |
| EXAMPLE2 | 1.4 | 1.20 | O |
| EXAMPLE3 | 2.6 | 1.20 | O |
| EXAMPLE4 | 2.4 | 1.47 | O |
| EXAMPLE5 | 2.7 | 1.45 | O |
| EXAMPLE6 | 1.7 | 1.46 | O |
| EXAMPLE7 | 1.2 | 1.25 | O |
| EXAMPLE8 | 2.1 | 1.38 | O |
| EXAMPLE9 | 1.7 | 1.46 | O |
| EXAMPLE10 | 1.2 | 1.25 | O |
| EXAMPLE11 | 1.4 | 1.20 | O |
| EXAMPLE12 | 2.1 | 1.38 | O |
| EXAMPLE13 | 2.6 | 1.20 | O |
| EXAMPLE14 | 2.2 | 3.00 | O |

# FIG.7

TABLE 2

|  | Gs(%) | SC | SENSORY ESTIMATION |
|---|---|---|---|
| COMPARATIVE EXAMPLE 1 | 4.2 | 0.96 | ✕ |
| COMPARATIVE EXAMPLE 2 | 2.5 | 0.94 | ✕ |
| COMPARATIVE EXAMPLE 3 | 4.2 | 0.85 | ✕ |
| COMPARATIVE EXAMPLE 4 | 2.6 | 0.92 | ✕ |
| COMPARATIVE EXAMPLE 5 | 3.6 | 0.96 | ✕ |
| COMPARATIVE EXAMPLE 6 | 2.6 | 0.91 | ✕ |
| COMPARATIVE EXAMPLE 7 | 2.9 | 0.88 | ✕ |
| COMPARATIVE EXAMPLE 8 | 3.0 | 0.80 | ✕ |
| COMPARATIVE EXAMPLE 9 | 3.3 | 0.98 | ✕ |
| COMPARATIVE EXAMPLE 10 | 3.1 | 0.80 | ✕ |
| COMPARATIVE EXAMPLE 11 | 2.3 | 0.80 | ✕ |
| COMPARATIVE EXAMPLE 12 | 4.5 | 0.85 | ✕ |
| COMPARATIVE EXAMPLE 13 | 4.8 | 0.94 | ✕ |
| COMPARATIVE EXAMPLE 14 | 2.6 | 0.78 | ✕ |
| COMPARATIVE EXAMPLE 15 | 3.7 | 0.80 | ✕ |
| COMPARATIVE EXAMPLE 16 | 4.7 | 0.94 | ✕ |
| COMPARATIVE EXAMPLE 17 | 2.5 | 0.94 | ✕ |
| COMPARATIVE EXAMPLE 18 | 3.4 | 0.91 | ✕ |
| COMPARATIVE EXAMPLE 19 | 2.6 | 0.78 | ✕ |
| COMPARATIVE EXAMPLE 20 | 2.3 | 0.78 | ✕ |
| COMPARATIVE EXAMPLE 21 | 2.8 | 0.92 | ✕ |
| COMPARATIVE EXAMPLE 22 | 2.9 | 0.91 | ✕ |
| COMPARATIVE EXAMPLE 23 | 4.2 | 0.94 | ✕ |
| COMPARATIVE EXAMPLE 24 | 3.1 | 0.78 | ✕ |
| COMPARATIVE EXAMPLE 25 | 4.1 | 0.96 | ✕ |
| COMPARATIVE EXAMPLE 26 | 4.1 | 0.73 | ✕ |
| COMPARATIVE EXAMPLE 27 | 4.4 | 0.85 | ✕ |
| COMPARATIVE EXAMPLE 28 | 3.7 | 0.89 | ✕ |
| COMPARATIVE EXAMPLE 29 | 3.0 | 0.80 | ✕ |
| COMPARATIVE EXAMPLE 30 | 3.5 | 0.91 | ✕ |
| COMPARATIVE EXAMPLE 31 | 3.9 | 0.89 | ✕ |

TABLE 3                  FIG.8

| | Gs(%) | SC | SENSORY ESTIMATION |
|---|---|---|---|
| COMPARATIVE EXAMPLE 32 | 4.5 | 0.73 | ✕ |
| COMPARATIVE EXAMPLE 33 | 2.5 | 0.80 | ✕ |
| COMPARATIVE EXAMPLE 34 | 3.9 | 0.73 | ✕ |
| COMPARATIVE EXAMPLE 35 | 4.2 | 0.89 | ✕ |
| COMPARATIVE EXAMPLE 36 | 4.7 | 0.94 | ✕ |
| COMPARATIVE EXAMPLE 37 | 5.8 | 0.85 | ✕ |
| COMPARATIVE EXAMPLE 38 | 4.2 | 0.96 | ✕ |
| COMPARATIVE EXAMPLE 39 | 5.6 | 0.85 | ✕ |
| COMPARATIVE EXAMPLE 40 | 4.4 | 0.85 | ✕ |
| COMPARATIVE EXAMPLE 41 | 3.0 | 0.80 | ✕ |
| COMPARATIVE EXAMPLE 42 | 5.0 | 0.85 | ✕ |
| COMPARATIVE EXAMPLE 43 | 2.5 | 0.80 | ✕ |
| COMPARATIVE EXAMPLE 44 | 3.6 | 0.89 | ✕ |
| COMPARATIVE EXAMPLE 45 | 4.3 | 0.73 | ✕ |
| COMPARATIVE EXAMPLE 46 | 5.1 | 0.94 | ✕ |
| COMPARATIVE EXAMPLE 47 | 2.7 | 0.78 | ✕ |
| COMPARATIVE EXAMPLE 48 | 5.9 | 0.85 | ✕ |
| COMPARATIVE EXAMPLE 49 | 3.6 | 0.73 | ✕ |
| COMPARATIVE EXAMPLE 50 | 4.2 | 0.73 | ✕ |
| COMPARATIVE EXAMPLE 51 | 4.4 | 0.94 | ✕ |
| COMPARATIVE EXAMPLE 52 | 5.0 | 0.82 | ✕ |
| COMPARATIVE EXAMPLE 53 | 5.9 | 0.82 | ✕ |
| COMPARATIVE EXAMPLE 54 | 5.7 | 0.82 | ✕ |
| COMPARATIVE EXAMPLE 55 | 4.1 | 0.89 | ✕ |
| COMPARATIVE EXAMPLE 56 | 2.8 | 0.78 | ✕ |
| COMPARATIVE EXAMPLE 57 | 2.8 | 0.78 | ✕ |
| COMPARATIVE EXAMPLE 58 | 6.0 | 0.85 | ✕ |
| COMPARATIVE EXAMPLE 59 | 4.2 | 0.89 | ✕ |
| COMPARATIVE EXAMPLE 60 | 2.2 | 0.83 | ✕ |
| COMPARATIVE EXAMPLE 61 | 6.0 | 0.82 | ✕ |
| COMPARATIVE EXAMPLE 62 | 5.4 | 0.85 | ✕ |
| COMPARATIVE EXAMPLE 63 | 3.9 | 0.89 | ✕ |
| COMPARATIVE EXAMPLE 64 | 5.5 | 0.82 | ✕ |
| COMPARATIVE EXAMPLE 65 | 6.1 | 0.82 | ✕ |
| COMPARATIVE EXAMPLE 66 | 3.8 | 0.89 | ✕ |
| COMPARATIVE EXAMPLE 67 | 5.3 | 0.82 | ✕ |
| COMPARATIVE EXAMPLE 68 | 5.4 | 0.82 | ✕ |
| COMPARATIVE EXAMPLE 69 | 5.4 | 0.82 | ✕ |
| COMPARATIVE EXAMPLE 70 | 3.8 | 0.89 | ✕ |
| COMPARATIVE EXAMPLE 71 | 2.8 | 0.80 | ✕ |
| COMPARATIVE EXAMPLE 72 | 2.2 | 1.17 | ✕ |
| COMPARATIVE EXAMPLE 73 | 2.2 | 1.12 | ✕ |
| COMPARATIVE EXAMPLE 74 | 3.4 | 1.48 | ✕ |
| COMPARATIVE EXAMPLE 75 | 2.2 | 1.12 | ✕ |
| COMPARATIVE EXAMPLE 76 | 2.2 | 1.17 | ✕ |
| COMPARATIVE EXAMPLE 77 | 3.4 | 1.20 | ✕ |

# FIG.9

TABLE 4

| | L* | Ra($\mu$m) | LLT | RRT | SENSORY ESTIMATION |
|---|---|---|---|---|---|
| EXAMPLE15 | 32.00 | 20.9 | 13.68 | 24.6 | ◯ |
| EXAMPLE16 | 32.00 | 23.9 | 13.7 | 24.6 | ◯ |
| EXAMPLE17 | 32.00 | 23.9 | 13.7 | 24.6 | ◯ |
| EXAMPLE18 | 54.68 | 17.1 | 15.9 | 31.4 | ◯ |
| EXAMPLE19 | 44.10 | 15.7 | 15.4 | 28.2 | ◯ |
| EXAMPLE20 | 56.78 | 31.2 | 17.1 | 32.0 | ◯ |
| EXAMPLE21 | 56.78 | 25.0 | 17.1 | 32.0 | ◯ |
| EXAMPLE22 | 56.78 | 28.1 | 17.1 | 32.0 | ◯ |
| EXAMPLE23 | 56.78 | 31.2 | 17.1 | 32.0 | ◯ |
| EXAMPLE24 | 34.93 | 25.0 | 14.1 | 25.5 | ◯ |
| EXAMPLE25 | 34.93 | 23.9 | 14.1 | 25.5 | ◯ |
| EXAMPLE26 | 44.10 | 28.1 | 15.4 | 28.2 | ◯ |
| EXAMPLE27 | 44.10 | 23.9 | 15.4 | 28.2 | ◯ |
| EXAMPLE28 | 29.20 | 23.4 | 13.3 | 23.8 | ◯ |

# FIG.10

TABLE 5

| | L* | Ra ($\mu$m) | LLT | RRT | SENSORY ESTI-MATION |
|---|---|---|---|---|---|
| COMPARATIVE EXAMPLE 78 | 44.10 | 14.1 | 15.4 | 28.2 | ✕ |
| COMPARATIVE EXAMPLE 79 | 54.68 | 14.4 | 16.9 | 31.4 | ✕ |
| COMPARATIVE EXAMPLE 80 | 46.64 | 14.9 | 15.7 | 29.0 | ✕ |
| COMPARATIVE EXAMPLE 81 | 54.68 | 14.6 | 16.9 | 31.4 | ✕ |
| COMPARATIVE EXAMPLE 82 | 40.41 | 14.1 | 14.9 | 27.1 | ✕ |
| COMPARATIVE EXAMPLE 83 | 54.68 | 14.6 | 16.9 | 31.4 | ✕ |
| COMPARATIVE EXAMPLE 84 | 56.78 | 15.6 | 17.1 | 32.0 | ✕ |
| COMPARATIVE EXAMPLE 85 | 44.10 | 13.4 | 15.4 | 28.2 | ✕ |
| COMPARATIVE EXAMPLE 86 | 56.78 | 15.0 | 17.1 | 32.0 | ✕ |
| COMPARATIVE EXAMPLE 87 | 40.41 | 13.9 | 14.9 | 27.1 | ✕ |
| COMPARATIVE EXAMPLE 88 | 34.93 | 13.9 | 14.1 | 25.5 | ✕ |
| COMPARATIVE EXAMPLE 89 | 44.10 | 14.9 | 15.4 | 28.2 | ✕ |
| COMPARATIVE EXAMPLE 90 | 46.64 | 13.9 | 15.7 | 29.0 | ✕ |
| COMPARATIVE EXAMPLE 91 | 40.41 | 12.4 | 14.9 | 27.1 | ✕ |
| COMPARATIVE EXAMPLE 92 | 44.10 | 13.9 | 15.4 | 28.2 | ✕ |
| COMPARATIVE EXAMPLE 93 | 44.10 | 13.9 | 15.4 | 28.2 | ✕ |
| COMPARATIVE EXAMPLE 94 | 56.78 | 14.4 | 17.1 | 32.0 | ✕ |
| COMPARATIVE EXAMPLE 95 | 54.68 | 14.4 | 16.9 | 31.4 | ✕ |
| COMPARATIVE EXAMPLE 96 | 46.64 | 12.4 | 15.7 | 29.0 | ✕ |
| COMPARATIVE EXAMPLE 97 | 34.93 | 12.4 | 14.1 | 25.5 | ✕ |
| COMPARATIVE EXAMPLE 98 | 56.78 | 14.6 | 17.1 | 32.0 | ✕ |
| COMPARATIVE EXAMPLE 99 | 56.78 | 14.6 | 17.1 | 32.0 | ✕ |
| COMPARATIVE EXAMPLE 100 | 40.41 | 13.9 | 14.9 | 27.1 | ✕ |
| COMPARATIVE EXAMPLE 101 | 44.10 | 12.4 | 15.4 | 28.2 | ✕ |
| COMPARATIVE EXAMPLE 102 | 54.68 | 14.1 | 16.9 | 31.4 | ✕ |
| COMPARATIVE EXAMPLE 103 | 46.64 | 14.0 | 15.7 | 29.0 | ✕ |
| COMPARATIVE EXAMPLE 104 | 54.68 | 14.9 | 16.9 | 31.4 | ✕ |
| COMPARATIVE EXAMPLE 105 | 40.41 | 11.6 | 14.9 | 27.1 | ✕ |
| COMPARATIVE EXAMPLE 106 | 54.68 | 13.9 | 16.9 | 31.4 | ✕ |
| COMPARATIVE EXAMPLE 107 | 56.78 | 14.4 | 17.1 | 32.0 | ✕ |
| COMPARATIVE EXAMPLE 108 | 46.64 | 11.6 | 15.7 | 29.0 | ✕ |

TABLE 6 FIG.11

| | L* | Ra (μm) | LLT | RRT | SENSORY ESTI-MATION |
|---|---|---|---|---|---|
| COMPARATIVE EXAMPLE 109 | 44.10 | 14.0 | 15.4 | 28.2 | × |
| COMPARATIVE EXAMPLE 110 | 54.68 | 13.4 | 16.9 | 31.4 | × |
| COMPARATIVE EXAMPLE 111 | 40.41 | 14.0 | 14.9 | 27.1 | × |
| COMPARATIVE EXAMPLE 112 | 44.10 | 11.6 | 15.4 | 28.2 | × |
| COMPARATIVE EXAMPLE 113 | 54.68 | 13.9 | 16.9 | 31.4 | × |
| COMPARATIVE EXAMPLE 114 | 46.64 | 13.9 | 15.7 | 29.0 | × |
| COMPARATIVE EXAMPLE 115 | 56.78 | 14.1 | 17.1 | 32.0 | × |
| COMPARATIVE EXAMPLE 116 | 44.10 | 13.9 | 15.4 | 28.2 | × |
| COMPARATIVE EXAMPLE 117 | 56.78 | 14.9 | 17.1 | 32.0 | × |
| COMPARATIVE EXAMPLE 118 | 56.78 | 13.9 | 17.1 | 32.0 | × |
| COMPARATIVE EXAMPLE 119 | 40.41 | 13.9 | 14.9 | 27.1 | × |
| COMPARATIVE EXAMPLE 120 | 56.78 | 13.4 | 17.1 | 32.0 | × |
| COMPARATIVE EXAMPLE 121 | 34.93 | 11.6 | 14.1 | 25.5 | × |
| COMPARATIVE EXAMPLE 122 | 54.68 | 14.0 | 16.9 | 31.4 | × |
| COMPARATIVE EXAMPLE 123 | 56.78 | 13.9 | 17.1 | 32.0 | × |
| COMPARATIVE EXAMPLE 124 | 54.68 | 12.4 | 16.9 | 31.4 | × |
| COMPARATIVE EXAMPLE 125 | 54.68 | 13.9 | 16.9 | 31.4 | × |
| COMPARATIVE EXAMPLE 126 | 34.93 | 14.0 | 14.1 | 25.5 | × |
| COMPARATIVE EXAMPLE 127 | 56.78 | 14.0 | 17.1 | 32.0 | × |
| COMPARATIVE EXAMPLE 128 | 34.93 | 13.9 | 14.1 | 25.5 | × |
| COMPARATIVE EXAMPLE 129 | 40.41 | 11.4 | 14.9 | 27.1 | × |
| COMPARATIVE EXAMPLE 130 | 46.64 | 11.4 | 15.7 | 29.0 | × |
| COMPARATIVE EXAMPLE 131 | 44.10 | 11.4 | 15.4 | 28.2 | × |
| COMPARATIVE EXAMPLE 132 | 54.68 | 11.6 | 16.9 | 31.4 | × |
| COMPARATIVE EXAMPLE 133 | 29.20 | 12.4 | 13.3 | 23.8 | × |
| COMPARATIVE EXAMPLE 134 | 56.78 | 12.4 | 17.1 | 32.0 | × |
| COMPARATIVE EXAMPLE 135 | 56.78 | 13.9 | 17.1 | 32.0 | × |
| COMPARATIVE EXAMPLE 136 | 56.78 | 11.6 | 17.1 | 32.0 | × |
| COMPARATIVE EXAMPLE 137 | 27.28 | 23.6 | 13.0 | 23.2 | × |
| COMPARATIVE EXAMPLE 138 | 54.68 | 11.4 | 16.9 | 31.4 | × |
| COMPARATIVE EXAMPLE 139 | 34.93 | 13.9 | 14.1 | 25.5 | × |
| COMPARATIVE EXAMPLE 140 | 29.20 | 11.6 | 13.3 | 23.8 | × |
| COMPARATIVE EXAMPLE 141 | 34.93 | 11.4 | 14.1 | 25.5 | × |
| COMPARATIVE EXAMPLE 142 | 56.78 | 11.4 | 17.1 | 32.0 | × |
| COMPARATIVE EXAMPLE 143 | 27.28 | 11.6 | 13.0 | 23.2 | × |
| COMPARATIVE EXAMPLE 144 | 29.20 | 11.4 | 13.3 | 23.8 | × |
| COMPARATIVE EXAMPLE 145 | 27.28 | 11.4 | 13.0 | 23.2 | × |
| COMPARATIVE EXAMPLE 146 | 32.00 | 11.4 | 13.7 | 24.6 | × |
| COMPARATIVE EXAMPLE 147 | 32.00 | 11.6 | 13.7 | 24.6 | × |
| COMPARATIVE EXAMPLE 148 | 32.00 | 13.4 | 13.7 | 24.6 | × |
| COMPARATIVE EXAMPLE 149 | 27.28 | 32.3 | 13.0 | 23.2 | × |
| COMPARATIVE EXAMPLE 150 | 27.28 | 23.6 | 13.0 | 23.2 | × |
| COMPARATIVE EXAMPLE 151 | 27.28 | 23.2 | 13.0 | 23.2 | × |
| COMPARATIVE EXAMPLE 152 | 27.28 | 23.6 | 13.0 | 23.2 | × |
| COMPARATIVE EXAMPLE 153 | 27.28 | 32.3 | 13.0 | 23.2 | × |
| COMPARATIVE EXAMPLE 154 | 27.28 | 23.9 | 13.0 | 23.2 | × |

# FIG.12

TABLE 7

|  | Gs(%) | SC | L* | Ra($\mu$m) | RT | SENSORY ESTIMATION |
|---|---|---|---|---|---|---|
| EXAMPLE29 | 2.3 | 1.48 | 32.00 | 20.9 | 8.2 | O |
| EXAMPLE30 | 1.4 | 1.20 | 32.00 | 23.9 | 7.9 | O |
| EXAMPLE31 | 2.6 | 1.20 | 32.00 | 23.9 | 9.0 | O |
| EXAMPLE32 | 2.4 | 1.47 | 54.68 | 17.1 | 6.8 | O |
| EXAMPLE33 | 2.7 | 1.45 | 44.10 | 15.7 | 7.1 | O |
| EXAMPLE34 | 1.7 | 1.46 | 56.78 | 31.2 | 1.6 | O |
| EXAMPLE35 | 1.2 | 1.25 | 56.78 | 25.0 | 4.2 | O |
| EXAMPLE36 | 2.1 | 1.38 | 56.78 | 28.1 | 3.0 | O |
| EXAMPLE37 | 1.7 | 1.46 | 56.78 | 31.2 | 1.59 | O |
| EXAMPLE38 | 1.2 | 1.25 | 34.93 | 25.0 | 6.85 | O |
| EXAMPLE39 | 1.4 | 1.20 | 34.93 | 23.9 | 7.12 | O |
| EXAMPLE40 | 2.1 | 1.38 | 44.10 | 28.1 | 4.35 | O |
| EXAMPLE41 | 2.6 | 1.20 | 44.10 | 23.9 | 5.78 | O |
| EXAMPLE42 | 2.2 | 3.00 | 29.20 | 23.4 | 6.01 | O |

# FIG.13

TABLE 8

|  | Gs(%) | SC | L* | Ra (μm) | RT | SENSORY ESTI-MATION |
|---|---|---|---|---|---|---|
| COMPARATIVE EXAMPLE 155 | 4.2 | 0.96 | 44.10 | 14.1 | 9.1 | × |
| COMPARATIVE EXAMPLE 156 | 2.5 | 0.94 | 54.68 | 14.4 | 9.1 | × |
| COMPARATIVE EXAMPLE 157 | 4.2 | 0.85 | 46.64 | 14.9 | 9.1 | × |
| COMPARATIVE EXAMPLE 158 | 2.6 | 0.92 | 54.68 | 14.6 | 9.1 | × |
| COMPARATIVE EXAMPLE 159 | 3.6 | 0.96 | 40.41 | 14.1 | 9.1 | × |
| COMPARATIVE EXAMPLE 160 | 2.6 | 0.91 | 54.68 | 14.6 | 9.1 | × |
| COMPARATIVE EXAMPLE 161 | 2.9 | 0.88 | 56.78 | 15.6 | 9.2 | × |
| COMPARATIVE EXAMPLE 162 | 3.0 | 0.80 | 44.10 | 13.4 | 9.2 | × |
| COMPARATIVE EXAMPLE 163 | 3.3 | 0.98 | 56.78 | 15.0 | 9.2 | × |
| COMPARATIVE EXAMPLE 164 | 3.1 | 0.80 | 40.41 | 13.9 | 9.3 | × |
| COMPARATIVE EXAMPLE 165 | 2.3 | 0.80 | 34.93 | 13.9 | 9.3 | × |
| COMPARATIVE EXAMPLE 166 | 4.5 | 0.85 | 44.10 | 14.9 | 9.3 | × |
| COMPARATIVE EXAMPLE 167 | 4.8 | 0.94 | 46.64 | 13.9 | 9.3 | × |
| COMPARATIVE EXAMPLE 168 | 2.6 | 0.78 | 40.41 | 12.4 | 9.3 | × |
| COMPARATIVE EXAMPLE 169 | 3.7 | 0.80 | 44.10 | 13.9 | 9.3 | × |
| COMPARATIVE EXAMPLE 170 | 4.7 | 0.94 | 44.10 | 13.9 | 9.4 | × |
| COMPARATIVE EXAMPLE 171 | 2.5 | 0.94 | 56.78 | 14.4 | 9.4 | × |
| COMPARATIVE EXAMPLE 172 | 3.4 | 0.91 | 54.68 | 14.4 | 9.4 | × |
| COMPARATIVE EXAMPLE 173 | 2.6 | 0.78 | 46.64 | 12.4 | 9.4 | × |
| COMPARATIVE EXAMPLE 174 | 2.3 | 0.78 | 34.93 | 12.4 | 9.4 | × |
| COMPARATIVE EXAMPLE 175 | 2.8 | 0.92 | 56.78 | 14.6 | 9.4 | × |
| COMPARATIVE EXAMPLE 176 | 2.9 | 0.91 | 56.78 | 14.6 | 9.5 | × |
| COMPARATIVE EXAMPLE 177 | 4.2 | 0.94 | 40.41 | 13.9 | 9.5 | × |
| COMPARATIVE EXAMPLE 178 | 3.1 | 0.78 | 44.10 | 12.4 | 9.5 | × |
| COMPARATIVE EXAMPLE 179 | 4.1 | 0.96 | 54.68 | 14.1 | 9.5 | × |
| COMPARATIVE EXAMPLE 180 | 4.1 | 0.73 | 46.64 | 14.0 | 9.5 | × |
| COMPARATIVE EXAMPLE 181 | 4.4 | 0.85 | 54.68 | 14.9 | 9.6 | × |
| COMPARATIVE EXAMPLE 182 | 3.7 | 0.89 | 40.41 | 11.6 | 9.7 | × |
| COMPARATIVE EXAMPLE 183 | 3.0 | 0.80 | 54.68 | 13.9 | 9.7 | × |
| COMPARATIVE EXAMPLE 184 | 3.5 | 0.91 | 56.78 | 14.4 | 9.7 | × |
| COMPARATIVE EXAMPLE 185 | 3.9 | 0.89 | 46.64 | 11.6 | 9.7 | × |

TABLE 9 

# FIG.14

| | Gs(%) | SC | L* | Ra ($\mu$m) | RT | SENSORY ESTI-MATION |
|---|---|---|---|---|---|---|
| COMPARATIVE EXAMPLE 186 | 4.5 | 0.73 | 44.10 | 14.0 | 9.7 | × |
| COMPARATIVE EXAMPLE 187 | 2.5 | 0.80 | 54.68 | 13.4 | 9.8 | × |
| COMPARATIVE EXAMPLE 188 | 3.9 | 0.73 | 40.41 | 14.0 | 9.8 | × |
| COMPARATIVE EXAMPLE 189 | 4.2 | 0.89 | 44.10 | 11.6 | 9.8 | × |
| COMPARATIVE EXAMPLE 190 | 4.7 | 0.94 | 54.68 | 13.9 | 9.8 | × |
| COMPARATIVE EXAMPLE 191 | 5.8 | 0.85 | 46.64 | 13.9 | 9.8 | × |
| COMPARATIVE EXAMPLE 192 | 4.2 | 0.96 | 56.78 | 14.1 | 9.9 | × |
| COMPARATIVE EXAMPLE 193 | 5.6 | 0.85 | 44.10 | 13.9 | 9.9 | × |
| COMPARATIVE EXAMPLE 194 | 4.4 | 0.85 | 56.78 | 14.9 | 9.9 | × |
| COMPARATIVE EXAMPLE 195 | 3.0 | 0.80 | 56.78 | 13.9 | 10.0 | × |
| COMPARATIVE EXAMPLE 196 | 5.0 | 0.85 | 40.41 | 13.9 | 10.0 | × |
| COMPARATIVE EXAMPLE 197 | 2.5 | 0.80 | 56.78 | 13.4 | 10.1 | × |
| COMPARATIVE EXAMPLE 198 | 3.6 | 0.89 | 34.93 | 11.6 | 10.1 | × |
| COMPARATIVE EXAMPLE 199 | 4.3 | 0.73 | 54.68 | 14.0 | 10.1 | × |
| COMPARATIVE EXAMPLE 200 | 5.1 | 0.94 | 56.78 | 13.9 | 10.2 | × |
| COMPARATIVE EXAMPLE 201 | 2.7 | 0.78 | 54.68 | 12.4 | 10.2 | × |
| COMPARATIVE EXAMPLE 202 | 5.9 | 0.85 | 54.68 | 13.9 | 10.3 | × |
| COMPARATIVE EXAMPLE 203 | 3.6 | 0.73 | 34.93 | 14.0 | 10.3 | × |
| COMPARATIVE EXAMPLE 204 | 4.2 | 0.73 | 56.78 | 14.0 | 10.5 | × |
| COMPARATIVE EXAMPLE 205 | 4.4 | 0.94 | 34.93 | 13.9 | 10.5 | × |
| COMPARATIVE EXAMPLE 206 | 5.0 | 0.82 | 40.41 | 11.4 | 10.5 | × |
| COMPARATIVE EXAMPLE 207 | 5.9 | 0.82 | 46.64 | 11.4 | 10.5 | × |
| COMPARATIVE EXAMPLE 208 | 5.7 | 0.82 | 44.10 | 11.4 | 10.5 | × |
| COMPARATIVE EXAMPLE 209 | 4.1 | 0.89 | 54.68 | 11.6 | 10.6 | × |
| COMPARATIVE EXAMPLE 210 | 2.8 | 0.78 | 29.20 | 12.4 | 10.6 | × |
| COMPARATIVE EXAMPLE 211 | 2.8 | 0.78 | 56.78 | 12.4 | 10.6 | × |
| COMPARATIVE EXAMPLE 212 | 6.0 | 0.85 | 56.78 | 13.9 | 10.6 | × |
| COMPARATIVE EXAMPLE 213 | 4.2 | 0.89 | 56.78 | 11.6 | 11.0 | × |
| COMPARATIVE EXAMPLE 214 | 2.2 | 0.83 | 27.28 | 23.6 | 11.2 | × |
| COMPARATIVE EXAMPLE 215 | 6.0 | 0.82 | 54.68 | 11.4 | 11.3 | × |
| COMPARATIVE EXAMPLE 216 | 5.4 | 0.85 | 34.93 | 13.9 | 11.4 | × |
| COMPARATIVE EXAMPLE 217 | 3.9 | 0.89 | 29.20 | 11.6 | 11.5 | × |
| COMPARATIVE EXAMPLE 218 | 5.5 | 0.82 | 34.93 | 11.4 | 11.7 | × |
| COMPARATIVE EXAMPLE 219 | 6.1 | 0.82 | 56.78 | 11.4 | 11.7 | × |
| COMPARATIVE EXAMPLE 220 | 3.8 | 0.89 | 27.28 | 11.6 | 11.8 | × |
| COMPARATIVE EXAMPLE 221 | 5.3 | 0.82 | 29.20 | 11.4 | 13.1 | × |
| COMPARATIVE EXAMPLE 222 | 5.4 | 0.82 | 27.28 | 11.4 | 13.8 | × |
| COMPARATIVE EXAMPLE 223 | 5.4 | 0.82 | 32.00 | 11.4 | 12.3 | × |
| COMPARATIVE EXAMPLE 224 | 3.8 | 0.89 | 32.00 | 11.6 | 10.7 | × |
| COMPARATIVE EXAMPLE 225 | 2.8 | 0.80 | 32.00 | 13.4 | 10.1 | × |
| COMPARATIVE EXAMPLE 226 | 2.2 | 1.17 | 27.28 | 32.3 | 11.3 | × |
| COMPARATIVE EXAMPLE 227 | 2.2 | 1.12 | 27.28 | 23.6 | 10.61 | × |
| COMPARATIVE EXAMPLE 228 | 3.4 | 1.48 | 27.28 | 23.2 | 11.3 | × |
| COMPARATIVE EXAMPLE 229 | 2.2 | 1.12 | 27.28 | 23.6 | 10.61 | × |
| COMPARATIVE EXAMPLE 230 | 2.2 | 1.17 | 27.28 | 32.3 | 11.3 | × |
| COMPARATIVE EXAMPLE 231 | 3.4 | 1.20 | 27.28 | 23.9 | 11.9 | × |

**REFERENCES CITED IN THE DESCRIPTION**

**Patent documents cited in the description**

- JP 10025668 A